# FASCICULE DE BREVET EUROPEEN

(11) **EP 1 707 540 B1**
(45) Date de publication et mention de la délivrance du brevet: **22.02.2017**
(21) Numéro de dépôt: 06290496.6
(22) Date de dépôt: 29.03.2006
(51) Int. Cl.: C02F 3/34, C02F 3/16

(54) **Installation de biodégradation aérobie des graisses ou boues dites physico-chimiques notamment d'industrie agro-alimentaire**
Vorrichtung zum aeroben biologischen Abbau von Fetten oder sogenannten physikochemischen Schlämmen insbesondere aus der Landwirtschaft und Nahrungsmittelindustrie
Installation for the aerobic biodegradation of fats or so-called physico-chemical sludge in particular from agriculture and food industry

(30) Priorité: 30.03.2005 FR 0503081
(43) Date de publication de la demande: 04.10.2006
(73) Titulaire: Eurobio S.A., 34000 Montpellier (FR)
(72) Inventeur: Meier Rodrigo, 34230 Vendemian (FR); Marquis, Thierry, 34560 Montbazin (FR)
(74) Mandataire: Berger, Helmut

(56) Documents cités:
- EP-A- 0 735 005
- EP-A- 1 151 967
- FR-A- 2 684 664
- FR-A- 2 708 923
- FR-A- 2 812 628
- GB-A- 548 664
- US-A- 4 087 496
- US-A- 5 965 431
- US-A1- 2004 182 780
- PATENT ABSTRACTS OF JAPAN vol. 2003, no. 11, 5 novembre 2003 (2003-11-05) & JP 2003 181487 A (TERA JAPAN KK), 2 juillet 2003 (2003-07-02)
- WANG Y ET AL: "THERMOSTABLE ALKALINE LIPASE FROM A NEWLY ISOLATED THERMOPHILIC BACILLUS, STRAIN A30-1 (ATCC 53841)" JOURNAL OF FERMENTATION AND BIOENGINEERING, SOCIETY OF FERMENTATION TECHNOLOGY, JP, vol. 79, no. 5, 1995, pages 433-438, XP002036572 ISSN: 0922-338X
- KEENAN D ET AL: "BIOLOGICAL AUGMENTATION ELIMINATES GREASE AND OIL IN BAKERY WASTEWATER" RESEARCH JOURNAL OF THE WATER POLLUTION CONTROL FEDERATION, WATER POLLUTION CONTROL FEDERATION, ALEXANDRIA, VA, US, vol. 72, no. 2, mars 2000 (2000-03), pages 141-146, XP001081444 ISSN: 1047-7624

## Description

L'invention concerne une installation de biodégradation aérobie des graisses ou boues dites physico-chimiques notamment d'industrie agro-alimentaire, comprenant des moyens d'hydrolyse des graisses ou boues par des lipases et de bêta-oxydation.

Il est connu que les industries agro-alimentaires sont soumises à un certain nombre de réglementations quant à l'évacuation de leurs déchets et effluents issus de la production ou des lavages. En général, ces industries sont équipées d'au moins un système de pré-traitement dont l'objectif est de séparer les matières grasses ou les matières colloïdales éventuelles de l'effluent qui sera rejeté au réseau pour un traitement complémentaire avant de parvenir au milieu naturel. Cette séparation génère la production de graisses ou boues physico-chimiques qui peuvent être éliminées par incinération, la mise en décharge étant désormais interdite. Afin de limiter les coûts importants de cette élimination, la solution biologique par biodégradation aérobie apparaît comme l'une des plus intéressantes du point de vue économique. Cette biodégradation est effectuée dans des installations de biodégradation aérobie du type défini plus haut, elles s'opèrent en deux étapes, de façon connue en soi, à savoir une étape d'hydrolyse réalisée par des lipases, c'est-à-dire des enzymes bactériennes, et une étape de bêta-oxydation qui permet la réduction des chaînes d'acides gras.

Les installations de biodégradation utilisées jusqu'à présent comportent un bassin d'hydrolyse d'un volume relativement important pour laisser spontanément une flore microbienne lipasique se développer. Ce bassin est équipé d'un agitateur qui ne permet néanmoins pas une oxygénation et un bassin aérobie pour la bêta-oxydation qui a pour rôle d'apporter l'oxygène et le temps de séjour nécessaire à la biodégradation.

Ces installations présentent les inconvénients majeurs tels que : le bassin d'hydrolyse nécessite des investissements de génie civil importants, il implique la génération d'odeurs liées au stockage de matières organiques fermentescibles pendant plusieurs jours, une sélection naturelle plus ou moins contrôlée de flore lipasique dans des conditions de température ambiante et surtout pas adaptée aux acides gras une production importante d'acides gras libres induisant une importante diminution de pH qu'il faudra neutraliser pour une biodégradation convenable. Le bassin d'oxydation nécessite lui aussi des investissements de génie civil importants. L'apport important d'oxygène nécessaire à une bonne conduite du procédé ainsi que les composés intermédiaires issus de la biodégradation en cours induisent une forte production de mousse qui oblige l'exploitation soit à limiter l'apport de matières organiques, soit à limiter les temps d'oxygénation pour laisser retomber la mousse, soit à augmenter la taille des bassins.

On peut ajouter encore que, pour améliorer l'hydrolyse ou la biodégradation aérobie, il convient d'ajouter des bactéries spécialisées, soit sous forme lyophilisées ou séchées. Les conditions de réveil ou de multiplication de ces bactéries spécifiques sont cependant très éloignées des paramètres des réactions chimiques, tel que la température notamment, rendant leur efficacité particulièrement limitée.

JP2003181487A et FR2812628A divulguent des installations pour la biodégradation des graisses par l'action de culture de micro-organismes, en particulier des cultures bactériennes. Elles contiennent un bioréacteur intégré à un biodigesteur.

La présente invention a pour but de proposer une installation de biodégradation, qui pallie les inconvénients qui viennent d'être énoncés des installations connues.

Pour atteindre ce but, une installation de biodégradation aérobie selon l'invention comporte des moyens de production de bactéries lipasiques, qui sont réalisées sous forme d'un bioréacteur indépendant et un biodigesteur dans lequel s'effectuent les étapes d'hydrolyse et de bêta-oxydation.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue schématique d'une installation de traitement des déchets et d'effluents, produits par des industries agro-alimentaires, équipées d'une installation de biodégradation aérobie selon l'invention ;
- la figure 2 est une vue schématique illustrant à plus grande échelle et plus en détail le bioréacteur indiqué en A sur la figure 1, et
- la figure 3 est une vue schématique d'un biodigesteur selon l'invention, tel que représenté schématiquement en B sur la figure 1.

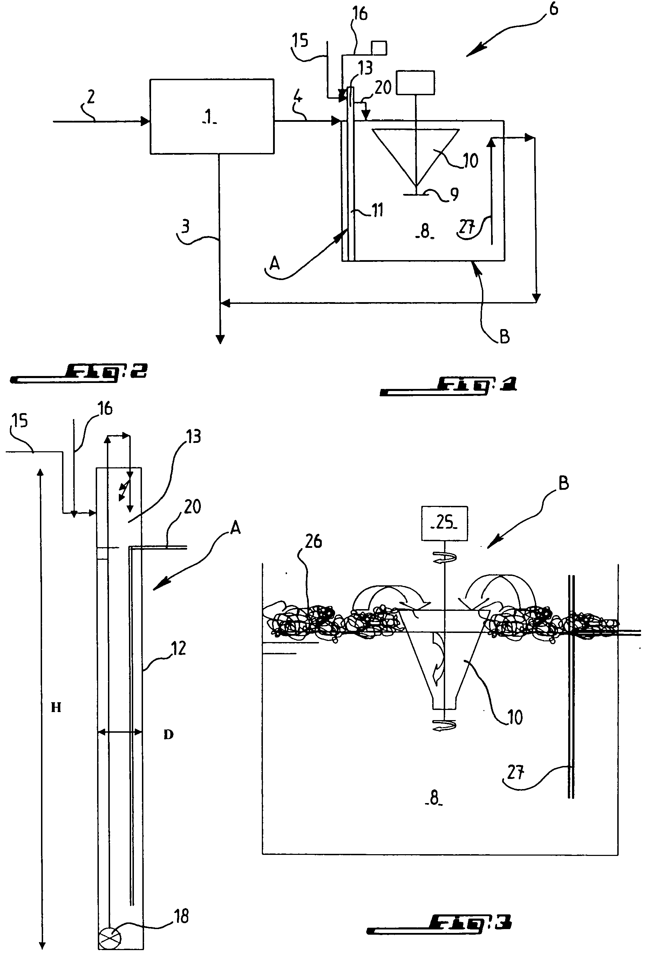

En se référant à la figure 1, la référence 1 désigne un aéroflottateur qui reçoit en 2 les déchets et effluents à l'état brut, en provenance de l'industrie agro-alimentaire qu'il sépare en effluents pré-traités 3 devant être rejetés au réseau et en graisses ou boues dites physico-chimiques désignées par la référence 4 qui sont destinées à être traitées dans une installation de biodégradation aérobie 6 selon l'invention.

Cette installation comporte essentiellement un biodigesteur B qui comprend essentiellement un bassin 8 et est pourvu d'un système d'oxygénation à l'aide d'une turbine 9 et d'un cône 10 d'aspiration des mousses générées lors de la biodégradation ainsi qu'un bioréacteur A qui est plongé dans le bassin des biodigesteur et destiné à produire les lipases destinées à assurer les réactions d'hydrolyse et de bêta-oxydation dans le bassin du biodigesteur.

Comme on le voit plus clairement sur la figure 2, le bioréacteur est réalisé sous forme d'une cuve tubulaire 12 reposant au fond du biodigesteur B. Sa forme très allongée reprend les caractéristiques des tubes à essais de culture bactérienne. Il est avantageusement de forme cylindrique avec un rapport hauteur H /diamètre D de 5 à 20. La cuve est réalisée avantageusement en une matière de type inox ou PVC pression ou tout autre matériau pouvant favoriser des échanges thermiques.

Le bioréacteur est alimenté au niveau de son extrémité supérieure 13 sortant vers le haut du biodigesteur, en eau potable et en nutriments, comme cela est illustré par les flèches respectivement 15 et 16. L'eau est fournie par le réseau via une électrovanne (non représentée) qui déclenche sur horloge l'apport de l'eau et l'injection des nutriments. Une pompe doseuse pourrait être prévue pour permettre d'apporter le nutriment adapté, avec sa pression de sélection en matière de source de carbone.

Au fond de la cuve tubulaire 12 est prévue une pompe de recirculation 18 qui assure le brassage et l'oxygénation de la culture à l'intérieur de la cuve.

La culture bactérienne à l'intérieur de la cuve est établie en fonction de sa capacité à secréter les lipases en grande quantité, à utiliser les acides gras à longue chaîne comme seule source de carbone par exemple de type triacylglycérol. La culture spécialisée engendrée à l'intérieur de la cuve 12 est évacuée par débordement au sommet 13 de celle-ci et injectée par 20 dans le biodigesteur B.

Le volume de culture spécialisée recommandé est de l'ordre de 0,2% minimum du volume du biodigesteur. Le bioréacteur est à cette fin avantageusement alimenté en semi-continu avec un taux de dilution recommandé entre 0,25 h⁻¹ et 0,02 h⁻¹. La population flore aérobie thermophile atteint dans ces conditions une numération de l'ordre de 2.10⁹ UFC/ml à 5.10⁹ UFC/ml.

Du fait que le bioréacteur A est directement plongé dans le biodigesteur 8, les conditions de température dans le bioréacteur sont très voisines de celles mesurables dans le biodigesteur, à savoir avantageusement entre 45 à 50°C. Par conséquent, la régulation de la température des souches bactériennes dans le bioréacteur se fait naturellement sans apport d'énergie supplémentaire par action exothermique que ces souches génèrent au cours de la biodigestion. D'autre part, et c'est l'intérêt majeur, les bactéries lipasiques cultivées dans le bioréacteur ne subiront donc aucun choc thermique et seront parfaitement et immédiatement opérationnelles.

Concernant le biodigesteur B, l'aération du bassin 8 est assurée par la turbine 9 entraînée en rotation par un moteur 25 et du type à aubes. Cette turbine est choisie de façon à pouvoir développer une puissance importante de l'ordre de 220 à 500 Watts/m³. L'oxygène est capté de l'air extérieur et acheminé par effet vortex dans la masse à oxygéner dans la cuve via le cône d'aspiration 10.

Ce cône assure en outre une parfaite maîtrise de la mousse présente à la surface du biodigesteur et produite par les réactions d'hydrolyse et de bêta-oxydation se déroulant dans la cuve 8 du biodigesteur. Comme on le voit sur la figure 3, cette mousse indiquée en 26 est aspirée par le cône 10, également sous l'effet de la turbine 9. Pour assurer la maîtrise parfaite de la mousse, il convient de choisir en conséquence les paramètres de fonctionnement, tels que la biomasse acclimatisée spécialisée et la charge en graisse entrante et de structure du digesteur, telle que la forme du bassin, à savoir sa surface par rapport à la hauteur d'eau. Il est avantageux de faire en sorte que les rapports surface du bassin en (m²) et de la hauteur utile du bassin en (m) soient compris entre 3,5 et 15 mètres.

Une particularité essentielle de l'invention repose sur les caractéristiques du cône d'aspiration 10 dont la surface à la base doit être comprise entre 2,5% et 7% de la surface du biodigesteur. Pour une surface importante et en respectant les ratios surface/hauteur, il convient de placer autant de turbines et cônes que nécessaire.

Les déchets entrant sont dégradés en continu selon un temps de séjour donné et transformés en biomasse. Cette liqueur mixte est évacuée par débordement en fonction du volume entrant. Afin d'éviter de rejeter des déchets frais donc a priori flottants, l'évacuation est réalisée via une cheminée verticale de surverse 27, plongée aux 2/3 de la profondeur du bassin occupée par la liqueur mixte globale. La quantité de biomasse dans le biodigesteur pouvant être relativement importante jusqu'à 40 g/l des risques de colmatage peuvent apparaître. Pour assurer une évacuation permanente de la liqueur mixte, un système de lavage régulier est mis en place par l'intermédiaire d'une pompe dont l'effet d'aspiration se produit à 2/3 de la profondeur du bassin. Son côté refoulement se situe en partie haute de la cheminée de surverse 27, c'est-à-dire dans la zone calme, où des colmatages pourraient se produire. Mais, la turbulence créée par le débit de la pompe ainsi que la température de la liqueur mixte assure un nettoyage permanent éliminant le risque des colmatages.

D'autre part, il est à noter que l'aération du biodigesteur est réalisée en permanence 24 heures sur 24 par la turbine qui propulse la liqueur mixte oxygénée sur les parois du bassin. La mousse produite par la puissance importante de l'agitation et les composés intermédiaires de biodégration est alors reprise en permanence par le cône d'aspiration dont la base est placée entre 10 et 25 cm au-dessus du niveau du liquide au repos.

L'installation selon l'invention présente des avantages évidents, notamment celui que l'intégration du bioréacteur A au biodigesteur B permet d'éviter l'installation d'un bassin d'hydrolyse séparé, typique de l'état de la technique, et dont les aspects négatifs ont été indiqués plus haut. Le bioréacteur A selon l'invention peut avantageusement être utilisé pour multiplier des bactéries lipasiques de type bacillus subtilis ou tout autre type de biomasse. Les bactéries peuvent être sélectionnées, le cas échéant, par le biodigesteur lui-même. Cette dernière propriété peut être particulièrement intéressante lorsque les déchets à traiter par le biodigesteur sont variables, par exemple des graisses de collectes diverses ou d'industries agro-alimentaires ayant des productions variables, et peuvent donc engendrer des variations de populations bactériennes. Dans ce cas, il est intéressant de prendre comme inoculum une partie de la liqueur mixte du biodigesteur au moment où l'on sait que celui-ci fonctionne dans des bonnes conditions avec des teneurs en matières grasses importantes à l'entrée.

Conformément à l'invention, grâce à la culture bactérienne lipasique et son équipement enzymatique produite et directement injectée dans le biodigesteur, l'hydrolyse y sera immédiatement réalisée sans modification importante de la valeur pH avantageusement comprise entre 6,5 et 8 puisque les acides gras seront dégradés en temps réel sans accumulation comme cela est le cas dans un bassin d'hydrolyse spécifique. Des conditions stables de température et de pH assurent alors des rendements plus poussés sur l'activité biologique.

Il est à noter que grâce à l'utilisation de bactéries lipasiques, thermophiles, le biodigesteur peut recevoir des teneurs de matières grasses importantes et fonctionner à des températures élevées entre 40 et 65°C en raison de l'activité biologique intense dans le biodigesteur.

Cette activité biologique est soutenue par l'excellente oxygénation assurée par la turbine. En plus de l'oxygénation, celle-ci a en outre pour fonction d'aspirer la mousse, produite en grande quantité et résultant de l'activité biologique intense et de l'oxygénation.

Un autre avantage de l'invention réside dans la configuration du bioréacteur de forme tubulaire. Cette forme en combinaison avec la turbine 18 au fond du tube assure une excellente circulation du liquide à l'intérieur du bioréacteur, qui permet une oxygénation uniforme très efficace encore améliorée par le fait que le liquide remonte au-dessus du niveau de la cuve du réacteur pour retomber dans celui-ci sous forme d'une pluie comme cela est symbolisé sur la figure 2 par la multitude de flèches.

Ces conditions de multiplication ou prolifération optimales des bactéries dans le biodigesteur permettent d'injecter dans celui-ci des bactéries, d'une source extérieure, qu'à des intervalles de temps relativement espacés. La prolifération des microorganismes dans le bioréacteur est avantagée par l'ajout de nutriments appropriés et de l'eau stérile telle que de l'eau potable.

Il est même possible, notamment dans des conditions de fonctionnement stable du biodigesteur, de renoncer pratiquement à l'injection extérieure des bactéries en ne les prélevant que dans le biodigesteur même.

## Revendications

1. Installation de biodégradation aérobie des graisses ou boues dites physico-chimiques, notamment d'industrie agro-alimentaire, comprenant un biodigesteur (B) auquel est associé un bioréacteur indépendant (A) de production de bactéries lipasiques destinées à assurer des réactions d'hydrolyse et de bêta-oxydation des graisses ou boues dans le biodigesteur (B), **caractérisée en ce que** le bioréacteur (A) est intégré au biodigesteur (B) et comprend une cuve (12) de forme tubulaire disposée verticalement dans le bassin (8) du biodigesteur (B), que le biodigesteur (B) est équipé d'un système d'oxygénation comprenant une turbine d'aération (9) du bassin (8), l'oxygène étant capté de l'air extérieur et acheminé par effet vortex dans la masse à oxygéner dans le bassin (8) via un cône d'aspiration (10) et **en ce que** la mousse produite dans le biodigesteur (B) est également aspirée par le cône (10) sous l'effet de la turbine (9).

2. Installation selon la revendication 1, **caractérisée en ce que** le bioréacteur (A) est adapté pour produire des bactéries thermophiles assurant un fonctionnement du biodigesteur (B) à des températures entre 40° et 65°.

3. Installation selon la revendication 1 ou 2, **caractérisée en ce que** la partie supérieure (13) du bioréacteur (A), qui sort du niveau de la masse contenue dans le bassin (8) du biodigesteur (B) comporte des moyens d'alimentation en eau (15) et en nutriments (16) et une sortie (20) de la culture spécifique produite dans le réacteur pour l'introduction de cette culture dans le biodigesteur(B).

4. Installation selon l'une des revendications 1 à 3, **caractérisée en ce que** le bioréacteur (A) comporte une pompe (18) de recirculation au fond de la cuve tubulaire (12) pour permettre le brassage et l'oxygénation de la culture continue dans le bioréacteur (A).

5. Installation selon l'une des revendications 1 à 4, **caractérisée en ce qu'**elle comporte une cheminée verticale de surverse (27) d'évacuation du bassin (8) de la liqueur mixte se trouvant dans le bassin(8).

6. Installation selon l'une des revendications 1 à 5, **caractérisée en ce que** le bioréacteur (A) présente la forme d'une cuve allongée reposant au fond du biodigesteur (B) et comprenant un rapport hauteur H / diamètre D compris entre 5 et 20.

7. Installation selon l'une des revendications 1 à 6, **caractérisée en ce que** le cône d'aspiration (10) a une surface de base comprise entre 2,5% et 7% de la surface du biodigesteur (B).

## Patentansprüche

1. Anlage zum aeroben biologischen Abbau von Fetten oder sogenannten physikochemischen Schlämmen insbesondere aus der Landwirtschaft und Nahrungsmittelindustrie, umfassend einen Fermenter (B), dem ein unabhängiger Bioreaktor (A) für die Produktion von Lipasebakterien zugeordnet ist, die bestimmt sind, Hydrolyse- und Beta-Oxidationsreaktionen der Fette oder Schlämme in dem Fermenter (B) durchzuführen, **dadurch gekennzeichnet, dass** der Bioreaktor (A) in den Fermenter (B) integriert ist und eine rohrförmigen Kessel (12) umfasst, der senkrecht in dem Becken (8) des Fermenters (B) angeordnet ist, dass der Fermenter (B) mit einem Oxigenierungssystem ausgestattet ist, das eine Belüftungsturbine (9) des Beckens (8) umfasst, wobei der Sauerstoff aus der Außenluft eingefangen wird und mittels Vortex-Effekt in die zu oxigenierende Masse in dem Becken (8) über einen Ansaugkonus (10) befördert wird und dass der in dem Fermenter (B) produzierte Schaum ebenfalls von dem Konus (10) durch Turbineneffekt angesaugt wird.

2. Anlage nach Anspruch 1, **dadurch gekennzeichnet, dass** der Bioreaktor (A) ausgebildet ist, um thermophile Bakterien zu produzieren, die eine Funktion des Fermenters (B) bei Temperaturen zwischen 40° und 65° sichern.

3. Anlage nach einem der Ansprüche 1 oder 2, **dadurch gekennzeichnet, dass** der obere Teil (13) des Bioreaktors (A), der aus der Ebene der in dem Becken (8) des Fermenters (B) enthaltenen Masse austritt, Versorgungsmittel mit Wasser (15) und mit Nutrimenten (16) und einen Ausgang (20) der in dem Reaktor hergestellten speziellen Kultur für das Einleiten dieser Kultur in den Fermenter (B) aufweist.

4. Anlage nach einem der Ansprüche 1 bis 3, **dadurch gekennzeichnet, dass** der Bioreaktor (A) eine Rezirkulationspumpe (18) auf dem Boden des rohrförmigen Kessels (12) aufweist, um das Rühren und die Oxigenierung der in dem Bioreaktor (A) enthaltenen Kultur zu erlauben.

5. Anlage nach einem der Ansprüche 1 bis 4, **dadurch gekennzeichnet, dass** sie eine vertikale Auslass-Überlaufführung (27) aus dem Becken (8) für das Flüssigkeitsgemisch aufweist, das sich in dem Becken (8) befindet.

6. Anlage nach einem der Ansprüche 1 bis 5, **dadurch gekennzeichnet, dass** der Bioreaktor (A) die Form eines länglichen Kessels aufweist, der auf dem Grund des Fermenters (B) ruht und ein Verhältnis Höhe H / Durchmesser D zwischen 5 und 20 hat.

7. Anlage nach einem der Ansprüche 1 bis 6, **dadurch gekennzeichnet, dass** der Ansaugkonus (10) eine Basisfläche zwischen 2,5 % und 7 % der Fläche des Fermenters (B) hat.

## Claims

1. An installation for the aerobic biodegradation of fats or so-called physicochemical sludge, in particular from the agricultural and food industry, comprising a biodigester (B) with which an independent bioreactor (A) is associated for producing bacterial lipases intended to provide hydrolysis and beta-oxidation reactions of the fats or sludge in the biodigester (B), **characterized in that** the bioreactor (A) is integrated into the biodigester (B) and comprises a tubular vat (12) arranged vertically in the basin (8) of the biodigester (B), the biodigester (B) is equipped with an oxygenating system comprising an aerating turbine (9) of the basin (8), the oxygen being captured from the outside air and conveyed by vortex effect in the mass to be oxygenated in the basin (8) via an aspirating cone (10) and **in that** the foam produced in the biodigester (B) is also aspirated by the cone (10) under the effect of the turbine (9).

2. The installation according to claim 1, **characterized in that** the bioreactor (A) is suitable for producing thermophilic bacteria ensuring an operation of the biodigester (B) at temperatures between 40° and 65°.

3. The installation according to claim 1 or 2, **characterized in that** the upper part (13) of the bioreactor (A), which protrudes from the level of the mass contained in the basin (8) of the biodigester (B), includes means for supplying water (15) and nutrients (16) and an outlet (20) for the specific crop produced in the reactor so that that crop may be introduced into the biodigester (B).

4. The installation according to one of claims 1 to 3, **characterized in that** the bioreactor (A) includes a recirculation pump (18) at the bottom of the tubular vat (12) to allow the mixing and oxygenation of the continuous culture in the bioreactor (A).

5. The installation according to one of claims 1 to 4, **characterized in that** it includes a vertical overflow chimney (27) for discharging the mixed liquor found in the basin (8) from the basin (8).

6. The installation according to one of claims 1 to 5, **characterized in that** the bioreactor (A) assumes the form of an elongated vat resting at the bottom of the biodigester (B) and comprising a height H / diameter D ratio comprised between 5 and 20.

7. The installation according to one of claims 1 to 6, **characterized in that** the aspirating cone (10) has a base surface comprised between 2.5% and 7% of the surface of the biodigester (B).
